# DEMANDE DE BREVET EUROPEEN

(11) **EP 1 683 660 A1**
(43) Date de publication de la demande: **26.07.2006**
(21) Numéro de dépôt: 06290103.8
(22) Date de dépôt: 17.01.2006
(51) Int. Cl.: B60G 5/06, B60G 21/04, B60G 11/64

(54) **Suspensions à compensation de containtes**

(30) Priorité: 21.01.2005 FR 0500618
(71) Demandeur: Vignes, Eric, 34000 Montpellier (FR)
(72) Inventeur: Vignes, Eric, 34000 Montpellier (FR)

(57) **Abrégé**

Système de suspension à compensation de contraintes.
L'invention concerne un système permettant de ramener la charge de tous les efforts des contraintes mécaniques d'un ensemble de suspension, du châssis d'un véhicule ou de sa coque auto porteuse, au niveau de l'axe commun aux 2 bras oscillants d'un train roulant fonctionnant en tandem.

Il est composé essentiellement d'au moins 2 bras de suspensions travaillants en opposition sur un axe qui peut être commun.

L'ensemble d'amortissement n'a aucun point de contact avec le châssis ou la coque auto- porteuse du véhicule.

Le dispositif, selon l'invention, est, en particulier, destiné aux véhicules roulants pour une charge par tandem comprise entre 1 gramme et 10000 tonnes.

## Description

Traditionnellement, les contraintes mécaniques liées à la charge d'un véhicule sont reprises par les points de liaison du / des systèmes de suspension au châssis ou à la coque autoporteuse. L'invention ne fonctionne que pour les véhicules ayant au minimum 2 points de contact au sol en position statique.

Ce dispositif, selon l'invention, permet de limiter les points d'appui des contraintes au nombre de deux pour un train roulant en tandem d'au moins deux roues sur le châssis ou la coque autoporteuse.
- Le train roulant en tandem se compose de deux bras oscillants, et/ ou triangulés, positionnés face à face et s'articulant sur un axe commun, bras de type « cantilever » par exemple.
- L'axe de rotation commun aux deux bras peut être lié et/ ou composé par une barre de torsion, au moins, travaillant comme une barre anti-roulis. Par rapport au sens normal de fonctionnement d'un véhicule utilisant au moins trois points de contact au sol ,à l'arrêt, les deux bras arrières( bras tirés gauches et droits) ou les deux bras avants(bras poussés gauches et droits) peuvent être liés mécaniquement à la barre de torsion utilisée comme axe de rotation des bras et agissant comme barre anti-roulis
- L'ensemble d'amortissement, combiné ressort-amortisseur par exemple, est commun aux deux bras en tandem, soit 1 seul amortisseur au minimum pour deux bras de suspension en tandem
- Les points de reprise des contraintes sur le châssis ou la coque auto-porteuse sont au minimum de deux pour un train tandem alors que jusqu'à présent il fallait au moins 3 points pour un seul train ; (Suspension de type « Mac Pherson » par exemple).
- l'ensemble d'amortissement (ressort-amortisseur) n'a pas de point de fixation au châssis ou la coque autoporteuse, les deux bras oscillants en opposition aborbants la variation des contraintes de charge à travers l'ensemble d'amortissement, l'un par la tête d'amortisseur et l'autre par le pied d'amortisseur, directement ou indirectement.
- L'amortisseur commun à au moins deux bras oscillants peut être intégré dans le boudin pneumatique d'une suspension à air. Le système peut fonctionner avec tous les types d'amortissements, qu'ils soient pneumatiques, hydrauliques, hydro-pneumatiques, assistés électriquement, et/ ou électroniquement et/ou informatiquement et / ou par effets magnétiques pilotés ou non.
- Ce système de suspension à compensation de contrainte en tandem peut être utilisé au minimum en un exemplaire par véhicule (pour une motocyclette par exemple),dans ce cas, l'axe d'articulation des deux bras peut ne pas être une barre de torsion.
- Ce système peut s'appliquer à tout type de véhicule roulant, flottant et/ ou volant motorisé et/ ou à tout type de remorque ou semi-remorque.

## Revendications

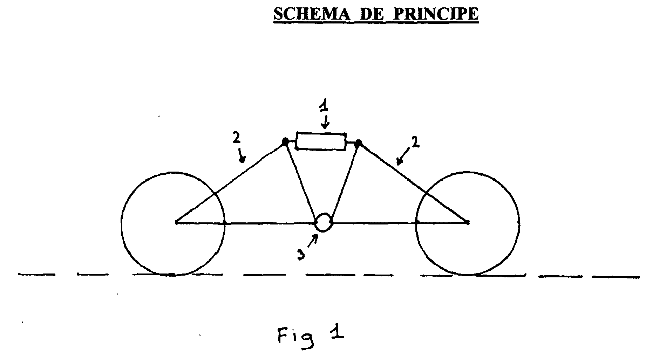

1. Système de train roulant en tandem à compensation de contrainte **caractérisé en ce qu'**il comporte (figure1) : au moins un axe de rotation (3) commun à 2 bras de suspension (2), au moins un combiné d'amortissement (1), commun à deux bras de suspension (2), au moins. L'axe de rotation (3) est la seule pièce mécanique par laquelle s'appliquent toutes les contraintes de charge du châssis ou la coque auto porteuse sur le train roulant. Les bras de suspension en tandem peuvent être de type « cantilever » et /ou de type triangulés et peuvent être reliés entre eux par une barre de torsion et/ ou anti-roulis faisant office de barre anti-roulis et d'axe de rotation commun aux 2 bras.
Dans le cas de suspensions à boudins pneumatiques, l'amortisseur peut être intégré dans le boudin pneumatique. Ce système est applicable à tout engin utilisant au moins deux roues pour ses déplacements à un moment donné. Ce système est exploitable quelle que soit la charge appliquée sur l'axe (3).
